(19) Europäisches Patentamt
European Patent Office
Office européen des brevets

(11) **EP 3 713 038 B1**

(12) **EUROPEAN PATENT SPECIFICATION**

(45) Date of publication and mention
of the grant of the patent:
**15.03.2023 Bulletin 2023/11**

(21) Application number: **18880023.9**

(22) Date of filing: **12.11.2018**

(51) International Patent Classification (IPC):
*H02J 7/00* (2006.01)    *B60L 58/10* (2019.01)
*B60L 3/00* (2006.01)

(52) Cooperative Patent Classification (CPC):
**B60L 53/30; B60L 3/0069; H02J 7/0013;**
H02J 7/0047; H02J 2310/48; Y02T 10/70;
Y02T 10/7072; Y02T 90/12

(86) International application number:
**PCT/CN2018/115031**

(87) International publication number:
**WO 2019/096091 (23.05.2019 Gazette 2019/21)**

(54) **CHARGING STATION AND CHARGING SYSTEM, METHOD AND APPARATUS**

LADESTATION UND LADESYSTEM, VERFAHREN UND VORRICHTUNG

STATION DE CHARGE ET SYSTÈME DE CHARGE, PROCÉDÉ ET APPAREIL DE CHARGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.11.2017 CN 201711142284**

(43) Date of publication of application:
**23.09.2020 Bulletin 2020/39**

(73) Proprietor: **NIO (Anhui) Holding Co., Ltd.
Hefei City, Anhui Province (CN)**

(72) Inventors:
• **CHEN, Xiaoyu
Jiading Shanghai (CN)**
• **RONG, Wujun
Jiading Shanghai (CN)**
• **GAN, Yinhua
Jiading Shanghai (CN)**
• **ZHU, Yue
Jiading Shanghai (CN)**

(74) Representative: **Vossius & Partner
Patentanwälte Rechtsanwälte mbB
Siebertstrasse 3
81675 München (DE)**

(56) References cited:
WO-A1-2015/128099    CN-A- 101 073 990
CN-A- 103 280 869    CN-A- 104 600 815
CN-A- 106 646 170    CN-A- 108 039 743
CN-U- 206 349 750    JP-A- 2003 169 401

## Description

## Technical Field

The invention relates to the technical field of battery charging and swapping for electric vehicles, and in particular to a charging station, a charging system and method, and apparatuses.

## Background Art

Currently, when controlling a traction battery to supply power to a load, it is first necessary to determine, by means of a battery management system, whether the load is connected. After it is determined that the load is connected, a high-voltage relay in the traction battery is controlled to be closed to form a power supply circuit. Based on the method described above, it can be ensured that the traction battery has been connected to the load when supplying power to the outside, so that when an electric vehicle is shut down or stopped, the traction battery is disconnected from an electric device in the electric vehicle. In addition, when a power supply system to which the traction battery belongs is in a standby state, the standby loss of the traction battery can be reduced.

When a traction battery is charged based on the power supply method described above, it is often necessary to connect a bypass resistor in parallel across the traction battery, so that the battery management system controls, when a bypass current is detected, a high-voltage relay to be closed, so as to form a charging circuit. However, the bypass resistor being connected in parallel across the traction battery can not only increase power losses and manufacturing costs, but also cause certain safety concerns when the bypass resistor breaks down.

JP 2003 169401 A relates to a power supply device having a leakage detection circuit for accurately detecting a leakage. CN 104 600 815 A relates to an electric vehicle charging system and a charging control method. CN 101 073 990 A relates to an electric vehicle power supply system with a high-voltage safety protection device, and a control method for safety protection of an electric vehicle power supply system.

## Summary of the Invention

The invention is defined by the independent claims. Further embodiments of the invention are defined by the dependent claims.

In order to solve the above-mentioned problems in the prior art, i.e., solving the technical problem of how to control a high-voltage relay in a traction battery to be closed so as to form a charging circuit, without adding a bypass resistor, the invention provides a charging station, a charging system and method, and an apparatus.

A first aspect of the invention is directed to a charging system, whose scope is defined by claim 1. In a non-limiting manner, said charging system comprises a power interface, a battery interface, power supply access switches, battery access switches, a pre-charging switch, an insulation monitoring module, and a controller,

wherein the power supply access switches are separately connected to positive and negative electrodes of the power interface, the battery access switches are separately connected to positive and negative electrodes of the battery interface, the pre-charging switch is connected in parallel with one of the battery access switches, and the insulation monitoring module is provided on a direct current bus bar between the power interface and a power supply access switch;

the controller is configured to control, when starting charging, the insulation monitoring module, power supply access switches, the pre-charging switch, a battery, and one of the battery access switches to form a current path, so as to close the other of the battery access switches after current is detected in the current path; and the controller is further configured to control, during a charging process, the insulation monitoring module to monitor an insulation resistance to ground of the direct current bus

The insulation monitoring module comprises a positive switch, a negative switch, a positive resistor, and a negative resistor; one end of the positive switch is grounded, and the other end thereof is connected to the positive direct current bus bar in the direct current bus bar through the positive resistor; and one end of the negative switch is grounded, and the other end thereof is connected to the negative direct current bus bar in the direct current bus bar through the negative resistor.

Further, one preferred technical solution provided in the invention is as follows:

the controller comprises a first control module; and the first control module is configured to perform the following operations:

controlling, when starting charging, the power supply access switch, the pre-charging switch and one of the battery access switches to be closed;

sending a preset first control instruction to the insulation monitoring module to form the current path when the power supply access switch is closed, wherein the preset first control instruction is an instruction capable of conducting positive and negative direct current bus bars in the direct current bus bar; and

controlling the other of the battery access switches to be closed, and sending a preset second control instruction to the insulation monitoring module to cut off the current path, wherein the preset second control instruction is an instruction capable of disconnecting the conducted positive and negative direct current bus bars.

Further, one preferred technical solution provided in the invention is as follows:

the controller further comprises a second control module; and the second control module is configured to perform the following operations: controlling the positive switch to be closed and the negative switch to be opened, so as to detect an insulation resistance to ground of the positive direct current bus bar in the direct current bus bar; and controlling the negative switch to be closed and the positive switch to be opened, so as to detect an insulation resistance to ground of the negative direct current bus bar in the direct current bus bar.

Further, one preferred technical solution provided in the invention is as follows:

the preset first control instruction is to control the positive switch and the negative switch to be closed at the same time; and the preset second control instruction is to control the positive switch and the negative switch to be opened at the same time.

Further, one preferred technical solution provided in the invention is as follows:

the power supply access switch is a relay or a controllable semiconductor switch; the battery access switch is a relay or a controllable semiconductor switch; and the pre-charging switch is a relay or a controllable semiconductor switch.

Further, one preferred technical solution provided in the invention is as follows:

the positive switch is a relay or a controllable semiconductor switch; and the negative switch is a relay or a controllable semiconductor switch.

Further, one preferred technical solution provided in the invention is as follows:

the system further comprises a power supply conversion module, wherein an input side of the power supply conversion module is connected to the power interface, and an output side thereof is connected to the power supply access switch; and the power supply conversion module is configured to convert an alternating/direct current charging power supply connected to the power interface into a direct current charging power supply available for a battery.

Further, one preferred technical solution provided in the invention is as follows: the power supply conversion module is an AC/DC module or a DC/DC module.

A second aspect of the invention is directed to a charging station, whose scope is defined by claim 9. Said charging station comprises a traction battery charging position and a charging system being an embodiment of the first aspect;

the traction battery charging position is provided with a power supply interface; and a power interface in the charging system is connected to the power supply interface.

A third aspect of the invention is directed to a charging method, whose scope is defined by claim 10. Said charging is used in a charging system, the charging system being an embodiment of the first aspect, wherein the method is used to control the charging system to charge a battery, which is specifically as follows:

controlling the power supply access switches, the pre-charging switch and one of the battery access switches in the charging system to be closed; detecting whether the power supply access switch is closed, and if yes, sending a preset first control instruction to an insulation monitoring module in the charging system to form the current path, wherein the preset first control instruction is an instruction capable of conducting positive and negative direct current bus bars in the direct current bus bar; and controlling the other of the battery access switches in the charging system to be closed, and sending a preset second control instruction to the insulation monitoring module to cut off the current path, wherein the preset second control instruction is an instruction capable of disconnecting the conducted positive and negative direct current bus bars.

Further, one preferred technical solution provided in the invention is as follows:

the method is further used to control, during a charging process, the insulation monitoring module to monitor an insulation resistance to ground of the direct current bus bar, which is specifically as follows: controlling a positive switch in the insulation monitoring module to be closed and a negative switch to be opened, so as to detect an insulation resistance to ground of the positive direct current bus bar in the direct current bus bar; and controlling the negative switch in the insulation monitoring module to be closed and the positive switch to be opened, so as to detect an insulation resistance to ground of the negative direct current bus bar in the direct current bus bar.

A fourth aspect of the invention is directed to a storage apparatus, whose scope is defined by claim 12. Said storage apparatus has a plurality of programs stored therein, wherein the programs are adapted to be loaded and executed by a processor to implement a charging method as described in the third aspect above.

A fifth aspect of the invention is directed to a processing apparatus, whose scope is defined by claim 13. Said processing apparatus comprises comprises a processor and a storage device. The processor is adapted to execute various programs; and the storage device is adapted to store a plurality of programs. The programs are adapted to be loaded and executed by the processor to implement a charging method as described in the third aspect above.

Compared with the closest prior art, the technical solutions described above have at least the following beneficial effects:

the charging system in the invention may control, by means of a controller when starting charging, an insulation monitoring module, power supply access switches, a pre-charging switch, a battery, and a battery access switch to form a current path, so as to close the other battery access switch after current is detected in the current path, i.e., controlling conventional devices in the charging circuit to form a current path without the need to provide a bypass resistor, so that not only manufacturing costs of the charging system are reduced, but also safety concerns and power losses that are caused by the bypass resistor are avoided, and the electrical safety of the charging system is improved.

## Brief Description of the Drawings

FIG. 1 is a schematic structural diagram of a charging system in an embodiment of the invention;
FIG. 2 is a schematic structural diagram of another charging system in an embodiment of the invention;
FIG. 3 is a schematic structural diagram of an insulation monitoring module; and
FIG. 4 is a schematic structural diagram of a charging system which is based on the insulation monitoring module shown in FIG. 3.

## Detailed Description of Embodiments

Preferred embodiments of the invention will be described below with reference to the accompanying drawings. It should be understood by those skilled in the art that these embodiments are only for explaining the technical principles of the invention, and are not intended to limit the scope of protection of the invention.

Currently, in order to reduce power losses and safety concerns that are caused by a bypass resistor of a traction battery, a signal relay can be added to disconnect, after a battery relay is closed, the traction battery from the bypass resistor by opening the signal relay. Although such a method reduces the safety concerns caused by the bypass resistor, it makes charging strategies of the traction battery more complicated, and provision of the signal relay also increases manufacturing costs. On this basis, the invention provides a charging system, which can control, in a safe and reliable manner, a battery relay to be closed without adding any components.

The charging system in this embodiment will be described below with reference to the drawings.

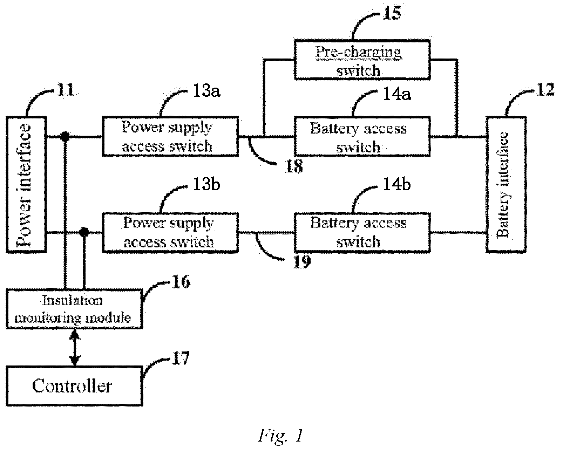

Referring to FIG. 1, FIG. 1 exemplarily shows the structure of a charging system in this embodiment. As shown in FIG. 1, the charging system in this embodiment may comprise a power interface 11, a battery interface 12, two power supply access switches 13, two battery access switches 14, a pre-charging switch 15, an insulation monitoring module 16, and a controller 17.

Specifically, in this embodiment, the two power supply access switches 14 are separately connected to positive and negative electrodes of the power interface 11, the two battery access switches 14 are separately connected to positive and negative electrodes of the battery interface 12, the pre-charging switch 15 is connected in parallel with one battery access switch 14 (as shown in FIG. 1, the pre-charging switch 15 is connected in parallel with the battery access switch 14 provided on a positive direct current bus bar 18), and the insulation monitoring module 16 is provided on a direct current bus bar between the power interface 11 and a power supply access switch 13 (as shown in FIG. 1, two ends of the insulation monitoring module 16 are separately connected to the positive direct current bus bar 18 and a negative direct current bus bar 19). In a preferred implementation of this embodiment, the power supply access switch 13 may be a relay or a controllable semiconductor switch, the battery access switch 14 may also be a relay or a controllable semiconductor switch, and the pre-charging switch 15 may also be a relay or a controllable semiconductor switch.

In this embodiment, the controller 17 may be configured to control, when starting charging, the insulation monitoring module 16, the power supply access switch 13, the pre-charging switch 15, the battery, and one of the battery access switches 14 (as shown in FIG. 1, the battery access switch is a battery access switch provided on the negative direct current bus bar 19) to form a current path, so as to close the other of the battery access switches 14 (as shown in FIG. 1, the battery access switch is a battery access switch provided on the positive direct current bus bar 18) after current is detected in the current path. In this embodiment, there is no need to provide a bypass resistor across the battery. By controlling the insulation monitoring module 16 and the battery to form a current path, both the battery access switches can be automatically controlled to be closed after current is detected in the current path, so as to complete a starting process of battery charging.

In addition, in this embodiment, the controller 17 may be further configured to control, when entering a charging process after the starting of charging is completed, the insulation monitoring module 16 to monitor an insulation resistance to ground of the direct current bus bar. In this embodiment, the insulation monitoring module 16 may be a conventional direct current insulation monitoring module.

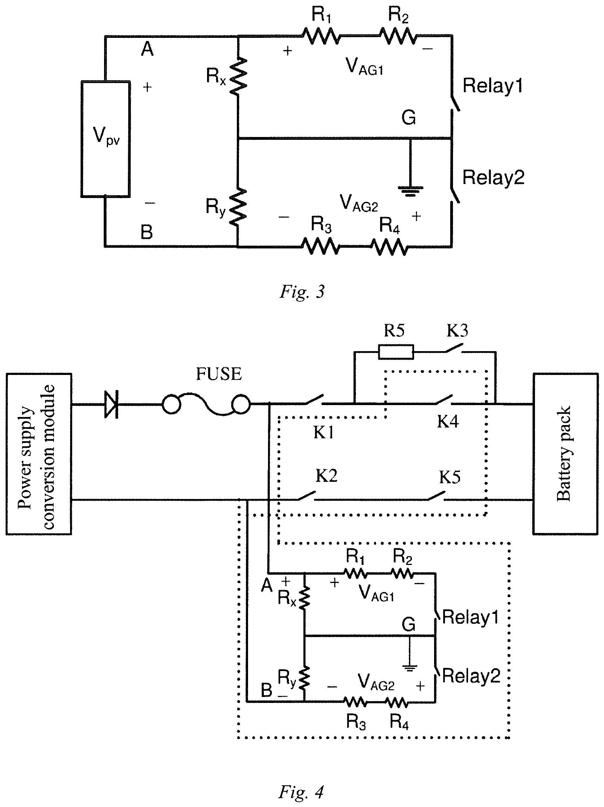

Referring to FIG. 3, FIG. 3 shows the structure of an insulation monitoring module in this embodiment. As shown in FIG. 3, the insulation monitoring module of the invention must comprise a positive switch Relayl and a negative switch Relay2, at least a positive resistor (e.g. $R_1$ and $R_2$), and at least a negative resistor ($R_3$ and $R_4$). One end of the positive switch Relayl is grounded, and the other end thereof is connected to a positive electrode of a direct current power supply $V_{pv}$ through the at least one positive resistor $R_2$ and $R_1$ in sequence. One end of the negative switch Relay2 is grounded, and the other end thereof is connected to a negative electrode of the direct current power supply $V_{pv}$ through the at least one negative resistor $R_4$ and $R_3$ in sequence. Further, when the insulation monitoring module shown in FIG. 3 is provided on the direct current bus bar between the power interface 11 and the power supply access switch 13 shown in FIG. 1, one end of the positive switch Relay1 is grounded, and the other end thereof is connected to the positive direct current bus bar 18 through the positive resistors $R_2$ and $R_1$ in sequence. One end of the negative switch Relay2 is grounded, and the other end thereof is connected to the negative direct current bus bar 19 through the negative resistors $R_4$ and $R_3$ in sequence. In a preferred implementation of this embodiment, the positive switch Relay1 may be a relay or a controllable semiconductor switch, and the negative switch Relay2 may also be a relay or a controllable semiconductor switch.

In this embodiment, the insulation monitoring module can monitor insulation resistances $R_x$ and $R_y$ to ground of positive and negative electrodes in the direct current power supply $V_{pv}$ according to steps which are specifically as follows:

step S101: first controlling the positive switch Relay1 to be closed and the negative switch Relay2 to remain in an open state, and then collecting a voltage $V_{AG1}$ across the positive resistors $R_1$ and $R_2$.
Step S102: first controlling the negative switch Relay2 to be closed and the positive switch Relay1 to remain in an open state, and then collecting a voltage $V_{AC2}$ across the negative resistors $R_3$ and $R_4$.
Step S103: calculating the insulation resistances $R_x$ and $R_y$ according to the following formula (1) based on the voltages $V_{AG1}$ and $V_{AG2}$ collected in steps S101 and S102:

$$\begin{cases} \dfrac{V_{AG1}}{R_1 + R_2} + \dfrac{V_{AG1}}{R_x} = \dfrac{V_{pv} - V_{AG1}}{R_y} \\ \dfrac{V_{AG2}}{R_3 + R_4} + \dfrac{V_{AG2}}{R_y} = \dfrac{V_{pv} - V_{AG2}}{R_x} \end{cases} \tag{1}$$

Further, the controller 17 in the charging system shown in FIG. 1 in this embodiment may comprise a first control module and a second control module.

Specifically, the first control module in this embodiment may be configured to perform the following operations:

step S201: controlling, when starting charging, the two power supply access switches 13, the pre-charging switch 15, and the battery access switch 14 provided on the negative direct current bus bar 19 shown in FIG. 1 to be closed.
Step S202: detecting whether the two power supply access switches 13 are closed, and sending a preset first control instruction to the insulation monitoring module 16 to form the current path when the two power supply access switches 13 are both closed. The preset first control instruction is an instruction capable of conducting the positive direct current bus bar 18 and the negative direct current bus bar 19 in the direct current bus bar.
Step S203: controlling the battery access switch 14 provided on the positive direct current bus bar 18 to be closed, and sending a preset second control instruction to the insulation monitoring module 16 to cut off the current path. The preset second control instruction is an instruction capable of disconnecting the conducted positive direct current bus bar 18 and negative direct current bus bar 19.

In a preferred implementation of this embodiment, the insulation monitoring module 16 may be the insulation monitoring module shown in FIG. 3. In this case, the preset first control instruction in this embodiment may be an instruction for controlling the positive switch Relayl and the negative switch Relay2 to be closed at the same time. The preset second control instruction is an instruction for controlling the positive switch Relayl and the negative switch Relay2 to be opened at the same time. In addition, the second control module in this embodiment may be configured to perform the following operations:

step S301: controlling the positive switch Relayl in the insulation monitoring module to be closed and the negative switch Relay2 to be opened, so as to detect an insulation resistance to ground of the positive direct current bus bar in the direct current bus bar.

Step S302: controlling the negative switch Relay2 in the insulation monitoring module to be closed and the positive switch Relayl to be opened, so as to detect an insulation resistance to ground of the negative direct current bus bar in the direct current bus bar.

In this embodiment, the insulation resistances to ground of the positive and negative direct current bus bars can be calculated by means of the method shown in formula (1).

Further, the charging system shown in FIG. 1 in this embodiment may further comprise a power supply conversion module, wherein an input side of the power supply conversion module is connected to the power interface 11, and an output side thereof is connected to the power supply access switch 13. Specifically, positive and negative electrodes at the input side of the power supply conversion module are separately connected to the positive and negative electrodes of the power interface 11, and positive and negative electrodes at the output side of the power supply conversion module are separately connected to the two power supply access switches 13. The power supply conversion module may be configured to convert an alternating/direct current charging power supply connected to the power interface 11 into a direct current charging power supply available for a battery. In a preferred implementation of this embodiment, the power supply conversion module may be an AC/DC module or a DC/DC module.

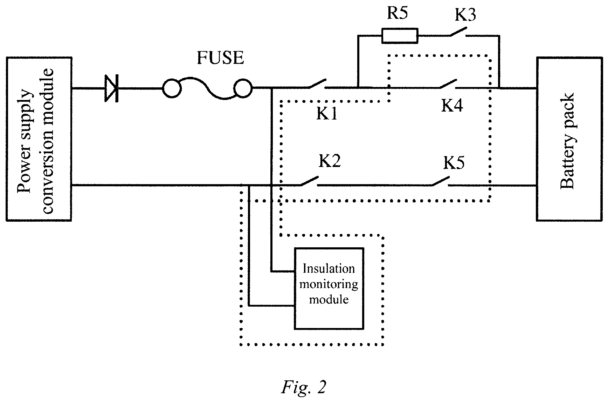

Referring to FIG. 2, FIG. 2 exemplarily shows the structure of another charging system in this embodiment. As shown in FIG. 2, the charging system in this embodiment may comprise a power supply conversion module, a power supply access switch K1, a power supply access switch K2, a pre-charging switch K3, a pre-charging resistor R5, a battery access switch K4, a battery access switch K5, and an insulation monitoring module.

Specifically, an input side of the power supply conversion module is connected to a power interface (as shown in FIG. 1), and positive and negative electrodes at an output side of the power supply conversion module are separately connected to the power supply access switch K1 and the power supply access switch K2. One end of the battery access switch K4 is connected to the power supply access switch K1, and the other end thereof is connected to a positive electrode of a battery interface (as shown in FIG. 1). One end of the battery access switch K5 is connected to the battery access switch K2, and the other end thereof is connected to a negative electrode of the battery interface (as shown in FIG. 1), wherein the battery interface is connected to a battery pack. After connected in series, the pre-charging switch K3 and the pre-charging resistor R5 are connected in parallel across the battery access switch K4.

With continued reference to FIG. 4, FIG. 4 exemplarily shows the structure of a charging system using the insulation monitoring module shown in FIG. 3 in this embodiment. As shown in FIG. 4, in this embodiment, a positive resistor $R_1$ of the insulation monitoring module is connected to a positive direct current bus bar, and a negative resistor $R_3$ thereof is connected to a negative direct current bus bar.

In this embodiment, the charging system further comprises a controller, which has the same function as the controller 17 (as shown in FIG. 1) in the above-mentioned embodiment of the charging system. Specifically, a first control module in the controller may be configured to perform the following operations:

step S401: controlling, when starting charging, power supply access switches K1 and K2, and a pre-charging switch K3 and a battery access switch K5 to be closed.

Step S402: detecting whether the two power supply access switches K1 and K2 are closed, and controlling, when the two power supply access switches K1 and K2 are both closed, a positive switch Relay1 and a negative switch Relay2 in the insulation monitoring module to be closed, so as to conduct the positive and negative direct current bus bars.

Step S403: controlling, when the battery access switch K4 is controlled to be closed, the positive switch Relay1 and the negative switch Relay2 in the insulation monitoring module to be opened, so as to disconnect the positive and negative direct current bus bars.

A second control module in the controller in this embodiment may be configured to perform the following operations:

step S501: controlling the positive switch Relay1 in the insulation monitoring module to be closed and the negative switch Relay2 to be opened, so as to detect an insulation resistance to ground of the positive direct current bus bar in the direct current bus bar.

Step S502: controlling the negative switch Relay2 in the insulation monitoring module to be closed and the positive switch Relay1 to be opened, so as to detect an insulation resistance to ground of the negative direct current bus bar in the direct current bus bar.

In this embodiment, the insulation resistances to ground of the positive and negative direct current bus bars can be calculated by means of the method shown in formula (1).

Those skilled in the art may understand that the charging system further comprises some other well-known structures, such as a processor, a memory, etc. The memory includes, but is not limited to, a random access memory, a flash memory, a read-only memory, a programmable read-only memory, and a volatile memory, a non-volatile memory, a serial memory, a parallel memory or a register, etc. The processor includes, but is not limited to, a CPLD/FPGA, a DSP, an ARM processor, an MIPS processor, etc. In order to not unnecessarily obscure embodiments of the disclosure, these well-known structures are not shown in FIGs. 1, 2, and 4.

It should be understood that the number of each type of devices in FIGs. 1, 2 and 4 is only schematic. According to actual needs, there may be any number of each type of devices.

Based on the embodiment of the charging system described above, the invention further provides a charging station, which may comprise a traction battery charging position, and a charging system as described in the system embodiment above. The traction battery charging position is provided with a power supply interface, and a power interface in the charging system (as shown in FIG. 1) may be connected to the power supply interface.

It should be noted that the charging station in this embodiment refers to a charging station, a battery swap station, a battery charging and swap station, or an energy storage power station that comprises the traction battery charging position, i.e., the technical solutions in which the charging system is provided in the charging station, the battery swap station, the battery charging and swap station, and the energy storage power station to charge a traction battery in a safe and reliable manner will all fall within the scope of protection of the invention if they comprise all features of the charging system defined by claim 1.

Based on the embodiment of the charging system described above, the invention further provides a charging method, which can be used to control a charging system as described in the system embodiment above to charge a battery. Specifically, the charging method in this embodiment may be used to control a charging system to charge a battery according to steps which are specifically as follows:

step S601: controlling a power supply access switch 13, a pre-charging switch 15, and a battery access switch 14 provided on a negative direct current bus bar 19 in the charging system (as shown in FIG. 1) to be closed.
Step S602: detecting whether the power supply access switch 13 is closed, and if yes, sending a preset first control instruction to an insulation monitoring module 16 in the charging system (as shown in FIG. 1) to form a current path. The preset first control instruction is an instruction capable of conducting the positive direct current bus bar 18 and the negative direct current bus bar 19 in the direct current bus bar.
Step S603: controlling a battery access switch 14 provided on the positive direct current bus bar in the charging system (as shown in FIG. 1) to be closed, and sending a preset second control instruction to the insulation monitoring module to cut off the current path. The preset second control instruction is an instruction capable of disconnecting the conducted positive direct current bus bar 18 and negative direct current bus bar 19.

Further, the method in this embodiment may be further used to control, during a charging process, the insulation monitoring module (as shown in FIG. 4) to monitor an insulation resistance to ground of the direct current bus bar, which is specifically as follows:

step S701: controlling a positive switch Relay1 in the insulation monitoring module to be closed and a negative switch Relay2 to be opened, so as to detect an insulation resistance to ground of the positive direct current bus bar in the direct current bus bar.
Step S702: controlling the negative switch Relay2 in the insulation monitoring module to be closed and the positive switch Relay1 to be opened, so as to detect an insulation resistance to ground of the negative direct current bus bar in the direct current bus bar.

Although the steps are described in the foregoing order in this embodiment, those skilled in the art can understand that in order to achieve the effects of this embodiment, different steps are not necessarily performed in this order, but can be performed simultaneously (in parallel) or in reverse order, and these simple variations are within the scope of protection of the invention, if it does not contradict the method defined in claim 10.

Based on the embodiment of the charging method described above, the invention further provides a storage apparatus which can store a plurality of programs, wherein these programs may be loaded and executed by a processor to implement a charging method described in the method embodiment above.

Further, based on the embodiment of the charging method described above, the invention further provides a processing apparatus, which comprises a processor and a storage device. The processor may be adapted to execute various programs, and the storage device may be adapted to store a plurality of programs. These programs may be loaded and executed by the processor to implement a charging method as described in the method embodiment above.

It should be noted that the description of the invention made in the above-mentioned embodiments is not to limit the invention, and those skilled in the art may design alternative embodiments without departing from the scope of the appended claims. In the claims, any reference signs placed between parentheses should not be construed as limitations on the claims. The word "contain" does not exclude the presence of elements or steps not listed in the claims. The word "a" or "an" in front of an element does not exclude the presence of a plurality of such elements. The invention may be implemented by means of hardware comprising several different elements and by means of a suitably programmed PC.

Furthermore, those skilled in the art should understand that although some embodiments described herein comprise certain features comprised in other embodiments, instead of other features, the combinations of the features of different embodiments mean being within the scope of the invention and forming different embodiments if they comprise all features of at least one of the appended independent claims.

Heretofore, the technical solutions of the invention have been described with reference to the preferred embodiments shown in the accompanying drawings; however, it would have been readily understood by those skilled in the art that the scope of protection of the invention is obviously not limited to these particular embodiments. Those skilled in the art may make equivalent changes or substitutions to related technical features without departing from the principle of the invention, and all the technical solutions after these changes or substitutions will fall within the scope of protection of the invention if they comprise all features of at least one of the appended independent claims.

**Claims**

1. A charging system comprising a power interface (11), a battery interface (12), a positive direct current bus bar (18), a negative direct current bus bar (19), a first power supply access switch (13a), a second power access switch (13b), a first battery access switch (14a), a second battery access switch (14b), a pre-charging switch (15), an insulation monitoring module (16) and a controller (17),

    wherein the first power supply access switch (13a) and the first battery access switch (14a) are connected in series between a positive electrode of the power interface (11) and a positive electrode of the battery interface (12) via the positive direct current bus bar (18), wherein a first end of the first power supply access switch (13a) is connected to the positive electrode of the power interface (11), a second end of the first power supply access switch (13a) is connected to a first end of the first battery access switch (14a), a second end of the first battery access switch (14a) is connected to positive electrode of the battery interface (12),

    wherein the second power supply access switch (13b) and the second battery access switch (14b) are connected in series between a negative electrode of the power interface (11) and a negative electrode of the battery interface (12) via the negative direct current bus bar (19), wherein a first end of the second power supply access switch (13b) is connected to the negative electrode of the power interface (11), a second end of the second power supply access switch (13b) is connected to a first end of the second battery access switch (14b), a second end of the second battery access switch (14b) is connected to negative electrode of the battery interface (12);

    wherein the pre-charging switch (15) is connected in parallel with one of the first battery access switch (14a) and the second battery access switch (14b);

    wherein a first end of the insulation monitoring module (16) is connected to the first end of the first power supply access switch (13a) and a second end of the insulation monitoring module (16) is connected to the first end of the second power supply access switch (13b)

    wherein the controller (17) is configured to control, during a starting process, the insulation monitoring module (16), the first power supply access switch (13a), the second power supply access switch (13b), the pre-charging switch (15) and the other of the first battery access switch (14a) and the second battery access switch (14b) which is not connected in parallel with the pre-charging switch (15) to form a current path together with a battery when said battery is connected to the positive and negative electrodes of the battery interface (12), so as to close the one of the first battery access switch (14a) and the second battery access switch (14b) which is connected in parallel with the pre-charging switch (15) after current is detected in the current path; and the controller (17) is further configured to control, during a charging process, the insulation monitoring module (16) to monitor an insulation resistance to ground of the direct current bus bar (18, 19),

    wherein the insulation monitoring module (16) comprises a positive switch (Relay1), a negative switch (Relay2), a positive resistor (R1, R2), and a negative resistor (R3, R4);

    one end of the positive switch (Relay1) is grounded (G), and the other end thereof is connected to the first end of the first power supply access switch (13a) through the positive resistor (R1, R2); and

    one end of the negative switch (Relay2) is grounded (G), and the other end thereof is connected to the first end of the second power supply access switch (13b) through the negative resistor (R3, R4).

2. The charging system according to claim 1, wherein the controller (17) comprises a first control module; and the first control module is configured to perform the following operations:

controlling, during the starting process, the first power supply access switch (13a), the second power supply access switch (13b), the pre-charging switch (15) and the other of the first battery access switch (14a) and the second battery access switch (14b) which is not connected in parallel with the pre-charging switch (15) to be closed;

sending a preset first control instruction to the insulation monitoring module (16) to form the current path when the first power supply access switch (13a) and the second power supply access switch (13b) are closed, wherein the preset first control instruction is an instruction configured to allow connection of current between the positive electrode of the power interface (11) and the negative electrode of the power interface (11) across the insulation monitoring module (16); and

controlling, on condition of detection of current in the current path, the one of the first battery access switch (14a) and the second battery access switch (14b) which is connected in parallel with the pre-charging switch (15) to be closed, and sending a preset second control instruction to the insulation monitoring module (16) to cut off the current path, wherein the preset second control instruction is an instruction configured to disable the connection of current between the positive electrode of the power interface (11) and the negative electrode of the power interface (11) across the insulation monitoring module (16).

3. The charging system according to claim 1, wherein the controller (17) further comprises a second control module; and the second control module is configured to perform the following operations:

controlling the positive switch to be closed and the negative switch to be opened, so as to detect an insulation resistance to ground of the positive direct current bus bar (18); and

controlling the negative switch to be closed and the positive switch to be opened, so as to detect an insulation resistance to ground of the negative direct current bus bar (19).

4. The charging system according to claim 1, wherein

the preset first control instruction is to control the positive switch and the negative switch to be closed at the same time; and

the preset second control instruction is to control the positive switch and the negative switch to be opened at the same time.

5. The charging system according to any of claims 1 to 4, wherein

the first power supply access switch (13a) and the second power supply access switch (13b) are a relay or a controllable semiconductor switch, respectively;

the first battery access switch (14a) and the second battery access switch (14b) are a relay or a controllable semiconductor switch, respectively; and

the pre-charging switch (15) is a relay or a controllable semiconductor switch.

6. The charging system according to claim 1, 3, or 4, wherein

the positive switch is a relay or a controllable semiconductor switch; and

the negative switch is a relay or a controllable semiconductor switch.

7. The charging system according to any of claims 1 to 4, further comprising a power supply conversion module, wherein a positive electrode and a negative electrode at an input side of the power supply conversion module are connected to the positive electrode and the negative electrode of the power interface (11), respectively, and a positive electrode and a negative electrode at an output side thereof are connected to the first power supply access switch (13a) and the second power supply access switch (13b), respectively; and

the power supply conversion module is configured to convert an alternating/direct current charging power supply connected to the power interface (11) into a direct current charging power supply available for a battery.

8. The charging system according to claim 7, wherein the power supply conversion module is an AC/DC module or a DC/DC module.

9. A charging station, comprising a traction battery charging position,

wherein the charging station further comprises a charging system according to any of claims 1 to 8;

the traction battery charging position is provided with a power supply interface; and

a power interface in the charging system is connected to the power supply interface.

10. A charging method for a charging system, wherein the charging system is a charging system according to any of claims 1 to 8, and the method is used to control the charging system to charge a battery, which is specifically as follows:

Controlling (S601), during the starting process, the first power supply access switch(13a), the second power supply access switch (13b), the pre-charging switch (15) and the other of the first battery access switch (14a) and the second battery access switch (14b) which is not connected in parallel with the pre-charging switch (15) in the charging system to be closed;

detecting (S602) whether the first power supply access switch (13a) and the second power supply access switch (13b) are closed, and if yes, sending a preset first control instruction to an insulation monitoring module (16) in the charging system to form the current path, wherein the preset first control instruction is an instruction configured to allow connection of current between the positive electrode of the power interface (11) and the negative electrode of the power interface (11) across the insulation monitoring module (16); and

controlling (S603), on condition of detection of current in the current path, the one of the first battery access switch (14a) and the second battery access switch (14b) which is connected in parallel with the pre-charging switch (15) in the charging system to be closed, and sending a preset second control instruction to the insulation monitoring module (16) to cut off the current path, wherein the preset second control instruction is an instruction configured to disable the connection of current between the positive electrode of the power interface (11) and the negative electrode of the power interface (11) across the insulation monitoring module (16).

11. The method according to claim 10, wherein the method is further used to control, during a charging process, the insulation monitoring module to monitor an insulation resistance to ground of the direct current bus bar, which is specifically as follows:

controlling (S701) a positive switch in the insulation monitoring module to be closed and a negative switch to be opened, so as to detect an insulation resistance to ground of the positive direct current bus bar; and

controlling (S702) the negative switch in the insulation monitoring module to be closed and the positive switch to be opened, so as to detect an insulation resistance to ground of the negative direct current bus bar.

12. A storage apparatus in which a plurality of programs are stored, wherein the programs are adapted to be loaded and executed by a processor to implement a charging method according to claim 10 or 11.

13. A processing apparatus, comprising:

a processor adapted to execute various programs; and

a storage device adapted to store a plurality of programs, wherein the programs are adapted to be loaded and executed by the processor to implement:

a charging method according to claim 10 or 11.

**Patentansprüche**

1. Ladesystem, umfassend eine Stromversorgungsschnittstelle (11), eine Batterieschnittstelle (12), eine Gleichstromsammelschiene (18) der Positivseite, eine Gleichstromsammelschiene (19) der Negativseite, einen ersten Stromversorgungszugangsschalter (13a), einen zweiten Stromversorgungszugangsschalter (13b), einen ersten Batteriezugangsschalter (14a), einen zweiten Batteriezugangsschalter (14b), einen Vorladeschalter (15), ein Isolationsüberwachungsmodul (16) und eine Steuerung (17),

wobei der erste Stromversorgungszugangsschalter (13a) und der erste Batteriezugangsschalter (14a) in Reihe zwischen einer positiven Elektrode der Stromversorgungsschnittstelle (11) und einer positiven Elektrode der Batterieschnittstelle (12) über die Gleichstromsammelschiene (18) der Positivseite geschaltet sind, wobei ein erstes Ende des ersten Stromversorgungszugangsschalters (13a) mit der positiven Elektrode der Stromversorgungsschnittstelle (11) verbunden ist, ein zweites Ende des ersten Stromversorgungszugangsschalters (13a) mit einem ersten Ende des ersten Batteriezugangsschalters (14a) verbunden ist, ein zweites Ende des ersten Batteriezugangsschalters (14a) mit der positiven Elektrode der Batterieschnittstelle (12) verbunden ist,

wobei der zweite Stromversorgungszugangsschalter (13b) und der zweite Batteriezugangsschalter (14b) in Reihe zwischen einer negativen Elektrode der Stromversorgungsschnittstelle (11) und einer negativen Elektrode der Batterieschnittstelle (12) über die Gleichstromsammelschiene (19) der Negativseite geschaltet sind, wobei ein erstes Ende des zweiten Stromversorgungszugangsschalters (13b) mit der negativen Elektrode der Stromversorgungsschnittstelle (11) verbunden ist, ein zweites Ende des zweiten Stromversorgungszugangsschalters (13b) mit einem ersten Ende des zweiten Batteriezugangsschalters (14b) verbunden ist, ein zweites Ende des zweiten Batteriezugangsschalters (14b) mit der negativen Elektrode der Batterieschnittstelle (12) verbunden ist; wobei der Vorladeschalter (15) parallel zu einem vom ersten Batteriezugangsschalter (14a) und dem zweiten Batteriezugangsschalter (14b) geschaltet ist;

wobei ein erstes Ende des Isolationsüberwachungsmoduls (16) mit dem ersten Ende des ersten Stromversorgungszugangsschalters (13a) verbunden ist und ein zweites Ende des Isolationsüberwachungsmoduls (16) mit dem ersten Ende des zweiten Stromversorgungszugangsschalters (13b) verbunden ist, wobei die Steuerung (17) so ausgelegt ist, dass sie während eines Startvorgangs das Isolationsüberwachungsmodul (16), den ersten Stromversorgungszugangsschalter (13a), den zweiten Stromversorgungszugangsschalter (13b), den Vorladeschalter (15) und den anderen vom ersten Batteriezugangsschalter (14a) und dem zweiten Batteriezugangsschalter (14b), der nicht parallel zum Vorladeschalter (15) geschaltet ist, so steuert, dass sie zusammen mit einer Batterie einen Strompfad bilden, wenn die Batterie mit der positiven und der negativen Elektrode der Batterieschnittstelle (12) verbunden ist, zu dem Zweck, den einen vom ersten Batteriezugangsschalter (14a) und dem zweiten Batteriezugangsschalter (14b), der parallel zum Vorladeschalter (15) geschaltet ist, zu schließen, nachdem ein Strom im Strompfad erfasst wurde; und die Steuerung (17) ferner so ausgelegt ist, dass sie während eines Ladevorgangs das Isolationsüberwachungsmodul (16) zum Überwachen eines Isolationswiderstandes der Gleichstromsammelschiene (18, 19) gegen Erde steuert, wobei das Isolationsüberwachungsmodul (16) einen Schalter (Relais1) der Positivseite, einen Schalter (Relais2) der Negativseite, einen Widerstand (R1, R2) der Positivseite und einen Widerstand (R3, R4) der Negativseite umfasst;

ein Ende des Schalters (Relais1) der Positivseite geerdet ist (G) und sein anderes Ende mit dem ersten Ende des ersten Stromversorgungszugangsschalters (13a) über den Widerstand (R1, R2) der Positivseite verbunden ist; und ein Ende des Schalters (Relais2) der Negativseite geerdet ist (G) und sein anderes Ende über den Widerstand (R3, R4) der Negativseite mit dem ersten Ende des zweiten Stromversorgungszugangsschalters (13b) verbunden ist.

2. Ladesystem nach Anspruch 1, wobei die Steuerung (17) ein erstes Steuermodul umfasst und das erste Steuermodul zum Durchführen der folgenden Vorgänge ausgelegt ist:

Steuern, während des Startvorgangs, des Schließens des ersten Stromversorgungszugangsschalters (13a), des zweiten Stromversorgungszugangsschalters (13b), des Vorladeschalters (15) und des anderen vom ersten Batteriezugangsschalter (14a) und dem zweiten Batteriezugangsschalter (14b), der nicht mit dem Vorladeschalter (15) parallel geschaltet ist; Senden einer voreingestellten ersten Steueranweisung an das Isolationsüberwachungsmodul (16) zum Bilden des Strompfades, wenn der erste Stromversorgungszugangsschalter (13a) und der zweite Stromversorgungszugangsschalter (13b) geschlossen sind, wobei die voreingestellte erste Steueranweisung eine Anweisung ist, die dafür ausgelegt ist, eine Stromverbindung zwischen der positiven Elektrode der Stromversorgungsschnittstelle (11) und der negativen Elektrode der Stromversorgungsschnittstelle (11) über das Isolationsüberwachungsmodul (16) zu ermöglichen; und Steuern, unter der Bedingung des Erfassens von Strom im Strompfad, des Schließens des einen vom ersten Batteriezugangsschalters (14a) und dem zweiten Batteriezugangsschalters (14b), der mit dem Vorladeschalter (15) parallel geschaltet ist, und Senden einer voreingestellten zweiten Steueranweisung an das Isolationsüberwachungsmodul (16) zum Unterbrechen des Strompfades, wobei die voreingestellte zweite Steueranweisung eine Anweisung ist, die dafür ausgelegt ist, die Stromverbindung zwischen der positiven Elektrode der Stromversorgungsschnittstelle (11) und der negativen Elektrode der Stromversorgungsschnittstelle (11) über das Isolationsüberwachungsmodul (16) zu deaktivieren.

3. Ladesystem nach Anspruch 1, wobei die Steuerung (17) ferner ein zweites Steuermodul umfasst und das zweite Steuermodul zum Durchführen der folgenden Vorgänge ausgelegt ist:

Steuern des Schließens des Schalters der Positivseite und des Öffnens des Schalters der Negativseite zum Erfassen eines Isolationswiderstandes der Gleichstromsammelschiene (18) der Positivseite gegen Erde; und Steuern des Schließens des Schalters der Negativseite und des Öffnens des Schalters der Positivseite zum Erfassen eines Isolationswiderstandes der Gleichstromsammelschiene (19) der Negativseite gegen Erde.

4. Ladesystem nach Anspruch 1, wobei die voreingestellte erste Steueranweisung dazu dient, den Schalter der Positivseite und den Schalter der Negativseite zum gleichzeitigen Schließen zu steuern; und die voreingestellte zweite Steueranweisung dazu dient, den Schalter der Positivseite und den Schalter der Negativseite zum gleichzeitigen Öffnen zu steuern.

5. Ladesystem nach einem der Ansprüche 1 bis 4, wobei

> der erste Stromversorgungszugangsschalter (13a) und der zweite Stromversorgungszugangsschalter (13b) ein Relais bzw. ein steuerbarer Halbleiterschalter sind;
> der erste Batteriezugangsschalter (14a) und der zweite Batteriezugangsschalter (14b) ein Relais bzw. ein steuerbarer Halbleiterschalter sind; und
> der Vorladeschalter (15) ein Relais oder ein steuerbarer Halbleiterschalter ist.

6. Ladesystem nach Anspruch 1, 3 oder 4, wobei

> der Schalter der Positivseite ein Relais oder ein steuerbarer Halbleiterschalter ist; und
> der Schalter der Negativseite ein Relais oder ein steuerbarer Halbleiterschalter ist.

7. Ladesystem nach einem der Ansprüche 1 bis 4, ferner umfassend ein Stromversorgungsumwandlungsmodul, wobei eine positive Elektrode und eine negative Elektrode an einer Eingangsseite des Stromversorgungsumwandlungsmoduls mit der positiven Elektrode bzw. der negativen Elektrode der Stromversorgungsschnittstelle (11) verbunden sind und eine positive Elektrode und eine negative Elektrode an einer Ausgangsseite davon mit dem ersten Stromversorgungszugangsschalter (13a) bzw. dem zweiten Stromversorgungszugangsschalter (13b) verbunden sind; und
das Stromversorgungsumwandlungsmodul dafür ausgelegt ist, eine mit der Stromversorgungsschnittstelle (11) verbundene Wechsel-/Gleichstrom-Ladestromversorgung in eine für eine Batterie verfügbare Gleichstrom-Ladestromversorgung umzuwandeln.

8. Ladesystem nach Anspruch 7, wobei das Stromversorgungsumwandlungsmodul ein AC/DC-Modul oder ein DC/DC-Modul ist.

9. Ladestation, umfassend eine Antriebsbatterie-Ladeposition,

> wobei die Ladestation ferner ein Ladesystem nach einem der Ansprüche 1 bis 8 umfasst;
> die Antriebsbatterie-Ladestation mit einer Stromversorgungsschnittstelle bereitgestellt ist; und eine Stromversorgungsschnittstelle im Ladesystem mit der Stromversorgungsschnittstelle verbunden ist.

10. Ladeverfahren für ein Ladesystem, wobei das Ladesystem ein Ladesystem nach einem der Ansprüche 1 bis 8 ist und das Verfahren dazu verwendet wird, das Ladesystem zum Laden einer Batterie zu steuern, wobei das Verfahren spezifisch folgende Schritte beinhaltet:

> Steuern (S601), während des Startvorgangs, des Schließens des ersten Stromversorgungszugangsschalters (13a), des zweiten Stromversorgungszugangsschalters (13b), des Vorladeschalters (15) und des anderen vom ersten Batteriezugangsschalter (14a) und dem zweiten Batteriezugangsschalter (14b), der nicht mit dem Vorladeschalter (15) im Ladesystem parallel geschaltet ist;
> Erfassen (S602), ob der erste Stromversorgungszugangsschalter (13a) und der zweite Stromversorgungszugangsschalter (13b) geschlossen sind, und wenn ja, Senden einer voreingestellten ersten Steueranweisung an ein Isolationsüberwachungsmodul (16) im Ladesystem zum Bilden des Strompfades, wobei die voreingestellte erste Steueranweisung eine Anweisung ist, die dafür ausgelegt ist, eine Stromverbindung zwischen der positiven Elektrode der Stromversorgungsschnittstelle (11) und der negativen Elektrode der Stromversorgungsschnittstelle (11) über das Isolationsüberwachungsmodul (16) zu ermöglichen; und
> Steuern (S603), unter der Bedingung des Erfassens von Strom im Strompfad, des Schließens des einen vom ersten Batteriezugangsschalters (14a) und dem zweiten Batteriezugangsschalters (14b), der mit dem Vorladeschalter (15) im Ladesystem parallel geschaltet ist, und Senden einer voreingestellten zweiten Steueranweisung an das Isolationsüberwachungsmodul (16) zum Unterbrechen des Strompfades, wobei die voreingestellte zweite Steueranweisung eine Anweisung ist, die dafür ausgelegt ist, die Stromverbindung zwischen der positiven Elektrode der Stromversorgungsschnittstelle (11) und der negativen Elektrode der Stromversorgungsschnittstelle (11) über das Isolationsüberwachungsmodul (16) zu deaktivieren.

11. Verfahren nach Anspruch 10, wobei das Verfahren ferner dazu verwendet wird, während eines Ladevorgangs das Isolationsüberwachungsmodul so zu steuern, dass es einen Isolationswiderstand der Gleichstromsammelschiene gegen Erde überwacht, spezifisch durch folgende Vorgänge:

> Steuern (S701) des Schließens eines Schalters der Positivseite im Isolationsüberwachungsmodul und des Öffnens eines Schalters der Negativseite zum Erfassen eines Isolationswiderstandes der Gleichstromsammelschiene der Positivseite gegen Erde; und
> Steuern (S702) des Schließens des Schalters der Negativseite im Isolationsüberwachungsmodul und des Öffnens des Schalters der Positivseite zum Erfassen eines Isolationswiderstandes der Gleichstromsammelschiene der Negativseite gegen Erde.

**12.** Speichervorrichtung, in der eine Vielzahl von Programmen gespeichert ist, wobei die Programme dazu eingerichtet sind, von einem Prozessor geladen und ausgeführt zu werden, zu dem Zweck, ein Ladeverfahren nach Anspruch 10 oder 11 zu implementieren.

**13.** Verarbeitungsvorrichtung, umfassend:

einen Prozessor, der zum Ausführen verschiedener Programme eingerichtet ist; und
eine Speichervorrichtung, die dazu eingerichtet ist, eine Vielzahl von Programmen zu speichern, wobei die Programme dazu eingerichtet sind, vom Prozessor geladen und ausgeführt zu werden, zu dem Zweck, folgendes Verfahren zu implementieren:
ein Ladeverfahren nach Anspruch 10 oder 11.

**Revendications**

**1.** Système de charge comprenant une interface d'alimentation (11), une interface de batterie (12), une barre omnibus à courant continu positif (18), une barre omnibus à courant continu négatif (19), un premier commutateur d'accès à l'alimentation électrique (13a), un second commutateur d'accès à l'alimentation électrique (13b), un premier commutateur d'accès à la batterie (14a), un second commutateur d'accès à la batterie (14b), un commutateur de précharge (15), un module de surveillance de l'isolation (16) et un contrôleur (17), où le premier commutateur d'accès à l'alimentation électrique (13a) et le premier commutateur d'accès à la batterie (14a) sont connectés en série entre une électrode positive de l'interface d'alimentation (11) et une électrode positive de l'interface de la batterie (12) par l'intermédiaire de la barre omnibus à courant continu positif (18), où une première extrémité du premier commutateur d'accès à l'alimentation électrique (13a) est connectée à l'électrode positive de l'interface d'alimentation (11), une seconde extrémité du premier commutateur d'accès à l'alimentation électrique (13a) est connectée à une première extrémité du premier commutateur d'accès à la batterie (14a), une seconde extrémité du premier commutateur d'accès à la batterie (14a) est connectée à l'électrode positive de l'interface de la batterie (12),

où le second commutateur d'accès à l'alimentation électrique (13b) et le second commutateur d'accès à la batterie (14b) sont connectés en série entre une électrode négative de l'interface d'alimentation (11) et une électrode négative de l'interface de la batterie (12) par l'intermédiaire de la barre omnibus à courant continu négatif (19), où une première extrémité du second commutateur d'accès à l'alimentation électrique (13b) est connectée à l'électrode négative de l'interface d'alimentation (11), une seconde extrémité du second commutateur d'accès à l'alimentation électrique (13b) est connectée à une première extrémité du second commutateur d'accès à la batterie (14b), une seconde extrémité du second commutateur d'accès à la batterie (14b) est connectée à l'électrode négative de l'interface de la batterie (12) ;
où le commutateur de précharge (15) est connecté en parallèle avec l'un du premier commutateur d'accès à la batterie (14a) et du second commutateur d'accès à la batterie (14b) ;
où une première extrémité du module de surveillance de l'isolation (16) est connectée à la première extrémité du premier commutateur d'accès à l'alimentation électrique (13a) et une seconde extrémité du module de surveillance de l'isolation (16) est connectée à la première extrémité du second commutateur d'accès à l'alimentation électrique (13b) ;
où le contrôleur (17) est configuré pour commander, pendant un processus de démarrage, le module de surveillance de l'isolation (16), le premier commutateur d'accès à l'alimentation électrique (13a), le second commutateur d'accès à l'alimentation électrique (13b), le commutateur de précharge (15) et l'autre du premier commutateur d'accès à la batterie (14a) et du second commutateur d'accès à la batterie (14b) qui n'est pas connecté en parallèle avec le commutateur de précharge (15) pour former un chemin de courant avec une batterie lorsque ladite batterie est connectée aux électrodes positive et négative de l'interface de batterie (12), de façon à fermer celui du premier commutateur d'accès à la batterie (14a) et du second commutateur d'accès à la batterie (14b) qui est connecté en parallèle avec le commutateur de précharge (15) après qu'un courant a été détecté dans le chemin de courant ; et le contrôleur (17) est en outre configuré pour commander, pendant un processus de charge, le module de surveillance de l'isolation (16) pour surveiller une résistance d'isolation à la terre de la barre omnibus à courant continu (18, 19), où le module de surveillance de l'isolation (16) comprend un commutateur positif (Relais 1), un commutateur négatif (Relais 2), une résistance positive (R1, R2) et une résistance négative (R3, R4) ;
une extrémité du commutateur positif (Relais 1) est mise à la terre (G), et son autre extrémité est connectée à la première extrémité du premier commutateur d'accès à l'alimentation électrique (13a) par l'intermédiaire de la résistance positive (R1, R2) ; et
une extrémité du commutateur négatif (Relais 2) est mise à la terre (G), et son autre extrémité est connectée à la première extrémité du second commutateur d'accès à l'alimentation électrique (13b) par l'intermédiaire de la résistance négative (R3, R4).

2. Système de charge selon la revendication 1, dans lequel le contrôleur (17) comprend un premier module de commande ; et le premier module de commande est configuré pour exécuter les opérations suivantes :

commander, pendant le processus de démarrage, la fermeture du premier commutateur d'accès à l'alimentation électrique (13a), du second commutateur d'accès à l'alimentation électrique (13b), du commutateur de précharge (15) et de l'autre du premier commutateur d'accès à la batterie (14a) et du second commutateur d'accès à la batterie (14b) qui n'est pas connecté en parallèle avec le commutateur de précharge (15) ; envoyer une première instruction de commande prédéfinie au module de surveillance de l'isolation (16) pour former le chemin de courant lorsque le premier commutateur d'accès à l'alimentation électrique (13a) et le second commutateur d'accès à l'alimentation électrique (13b) sont fermés, où la première instruction de commande prédéfinie est une instruction configurée pour permettre la connexion du courant entre l'électrode positive de l'interface d'alimentation (11) et l'électrode négative de l'interface d'alimentation (11) à travers le module de surveillance de l'isolation (16) ; et
commander, à la condition de la détection d'un courant dans le chemin de courant, celui du premier commutateur d'accès à la batterie (14a) et du second commutateur d'accès à la batterie (14b) qui est connecté en parallèle avec le commutateur de précharge (15) pour qu'il soit fermé, et envoyer une seconde instruction de commande prédéfinie au module de surveillance de l'isolation (16) pour couper le chemin de courant, où la seconde instruction de commande prédéfinie est une instruction configurée pour désactiver la connexion du courant entre l'électrode positive de l'interface d'alimentation (11) et l'électrode négative de l'interface d'alimentation (11) à travers le module de surveillance de l'isolation (16).

3. Système de charge selon la revendication 1, dans lequel le contrôleur (17) comprend en outre un second module de commande ; et le second module de commande est configuré pour exécuter les opérations suivantes :

commander la fermeture du commutateur positif et l'ouverture du commutateur négatif, de manière à détecter une résistance d'isolation à la terre de la barre omnibus à courant continu positif (18) ; et
commander la fermeture du commutateur négatif et l'ouverture du commutateur positif, de manière à détecter une résistance d'isolation à la terre de la barre omnibus à courant continu négatif (19).

4. Système de charge selon la revendication 1, dans lequel :

la première instruction de commande prédéfinie comprend de commander la fermeture simultanée du commutateur positif et du commutateur négatif ; et
la seconde instruction de commande prédéfinie comprend de commander l'ouverture simultanée du commutateur positif et du commutateur négatif.

5. Système de charge selon l'une quelconque des revendications 1 à 4, dans lequel :

le premier commutateur d'accès à l'alimentation électrique (13a) et le second commutateur d'accès à l'alimentation électrique (13b) sont respectivement un relais ou un commutateur à semi-conducteur contrôlable ;
le premier commutateur d'accès à la batterie (14a) et le second commutateur d'accès à la batterie (14b) sont respectivement un relais ou un commutateur à semi-conducteur contrôlable ; et
le commutateur de précharge (15) est un relais ou un commutateur à semi-conducteur contrôlable.

6. Système de charge selon la revendication 1, 3 ou 4, dans lequel :

le commutateur positif est un relais ou un commutateur à semi-conducteur contrôlable ; et
le commutateur négatif est un relais ou un commutateur à semi-conducteur contrôlable.

7. Système de charge selon l'une quelconque des revendications 1 à 4,

comprenant en outre un module de conversion d'alimentation électrique, où une électrode positive et une électrode négative du côté entrée du module de conversion d'alimentation électrique sont connectées à l'électrode positive et à l'électrode négative de l'interface d'alimentation électrique (11), respectivement, et une électrode positive et une électrode négative du côté sortie de celui-ci sont connectées au premier commutateur d'accès d'alimentation électrique (13a) et au second commutateur d'accès d'alimentation électrique (13b), respectivement ; et le module de conversion d'alimentation électrique est configuré pour convertir une alimentation électrique de charge à courant alternatif/continu connectée à l'interface d'alimentation électrique (11) en une alimentation électrique de charge à courant continu disponible pour une batterie.

8. Système de charge selon la revendication 7, dans lequel :

le module de conversion d'alimentation électrique est un module AC/DC ou un module DC/DC.

9. Station de charge, comprenant une position de charge de batterie de traction, où la station de charge comprend en outre un système de charge selon l'une quelconque des revendications 1 à 8 ;

la position de charge de la batterie de traction est munie d'une interface d'alimentation électrique ; et
une interface d'alimentation dans le système de charge est connectée à l'interface d'alimentation électrique.

10. Procédé de charge pour un système de charge, dans lequel le système de charge est un système de charge selon l'une quelconque des revendications 1 à 8, et le procédé est utilisé pour commander le système de charge pour charger une batterie, lequel procédé comprend spécifiquement les étapes suivantes :

commander (S601), pendant le processus de démarrage, la fermeture du premier commutateur d'accès à l'alimentation électrique (13a), du second commutateur d'accès à l'alimentation électrique (13b), du commutateur de précharge (15) et de l'autre du premier commutateur d'accès à la batterie (14a) et du second commutateur d'accès à la batterie (14b) qui n'est pas connecté en parallèle avec le commutateur de précharge (15) dans le système de charge ;
détecter (S602) si le premier commutateur d'accès à l'alimentation électrique (13a) et le second commutateur d'accès à l'alimentation électrique (13b) sont fermés et, si oui, envoyer une première instruction de commande prédéfinie à un module de surveillance de l'isolation (16) dans le système de charge pour former le chemin de courant, où la première instruction de commande prédéfinie est une instruction configurée pour permettre la connexion du courant entre l'électrode positive de l'interface d'alimentation (11) et l'électrode négative de l'interface d'alimentation (11) à travers le module de surveillance de l'isolation (16) ; et
commander (S603), à la condition de la détection d'un courant dans le chemin de courant, celui du premier commutateur d'accès à la batterie (14a) et du second commutateur d'accès à la batterie (14b) qui est connecté en parallèle avec le commutateur de précharge (15) dans le système de charge pour être fermé, et envoyer une seconde instruction de commande prédéfinie au module de surveillance d'isolation (16) pour couper le chemin de courant, où la seconde instruction de commande prédéfinie est une instruction configurée pour désactiver la connexion du courant entre l'électrode positive de l'interface d'alimentation (11) et l'électrode négative de l'interface d'alimentation (11) à travers le module de surveillance de l'isolation (16).

11. Procédé selon la revendication 10, dans lequel le procédé est en outre utilisé pour commander, pendant un processus de charge, le module de surveillance de l'isolation pour surveiller une résistance d'isolation à la terre de la barre omnibus à courant continu, lequel procédé comprend spécifiquement les étapes suivantes :

commander (S701) la fermeture d'un commutateur positif dans le module de surveillance de l'isolation et l'ouverture d'un commutateur négatif, de manière à détecter une résistance d'isolation à la terre de la barre omnibus à courant continu positif ; et
commander (S702) la fermeture du commutateur négatif dans le module de surveillance de l'isolation et l'ouverture du commutateur positif, de manière à détecter une résistance d'isolation à la terre de la barre omnibus à courant continu négatif.

12. Appareil de stockage dans lequel une pluralité de programmes sont stockés,
où les programmes sont adaptés pour être chargés et exécutés par un processeur pour mettre en oeuvre un procédé de charge selon la revendication 10 ou la revendication 11.

13. Appareil de traitement comprenant :

un processeur adapté pour exécuter divers programmes ; et
un dispositif de stockage adapté pour stocker une pluralité de programmes,

où les programmes sont adaptés pour être chargés et exécutés par le processeur pour mettre en oeuvre :
un procédé de charge selon la revendication 10 ou la revendication 11.

*Fig. 1*

*Fig. 2*

18

*Fig. 3*

*Fig. 4*

**REFERENCES CITED IN THE DESCRIPTION**

**Patent documents cited in the description**

- JP 2003169401 A
- CN 104600815 A
- CN 101073990 A